# FASCICULE DE BREVET EUROPEEN

(11) **EP 3 416 880 B1**
(45) Date de publication et mention de la délivrance du brevet: **08.04.2020**
(21) Numéro de dépôt: 17707606.4
(22) Date de dépôt: 31.01.2017
(51) Int. Cl.: B62K 23/04, B62K 25/08, B62K 25/30

(54) **KIT DE SUSPENSIONS A COMPRESSION AJUSTABLE POUR UN VÉHICULE**
AUFHÄNGUNGSKIT MIT ANPASSBARER KOMPRESSION FÜR EIN FAHRZEUG
ADJUSTABLE COMPRESSION SUSPENSION KIT FOR A VEHICLE

(30) Priorité: 15.02.2016 FR 1651185
(43) Date de publication de la demande: 26.12.2018
(73) Titulaire: Decathlon, 59650 Villeneuve d'Ascq (FR)
(72) Inventeur: POUPART, François, 7700 Luingne (BE); DESTREBECQ, Gautier, 62670 Mazingarbe (FR); FRANCOIS, Alexandre, 59700 Marcq en Baroeul (FR); LOZACH, Rémi, 59350 Saint Andre Lez Lille (FR); GARATE, Zigor, 59260 Lezennes (FR)
(74) Mandataire: Cabinet Beau de Loménie
(86) Numéro de dépôt international: PCT/FR2017/050213
(87) Numéro de publication internationale: WO 2017/140965

(56) Documents cités:
- JP-A- H04 292 288
- US-A- 5 860 660
- US-A1- 2005 252 330

## Description

### Arrière-plan de l'invention

La présente invention concerne le domaine des véhicules, en particulier les véhicules à roues et notamment les cycles, par exemple les vélos.

Elle concerne plus précisément un kit de suspensions à compression ajustable pour un véhicule, en particulier un véhicule à roues ayant au moins un guidon.

Il est connu que, pour ajuster l'amortissement d'une suspension, il est généralement nécessaire de procéder à trois réglages : la pré-charge, la détente et la compression.

Le réglage de la pré-charge consiste à ajuster la raideur du ressort de manière à rehausser le cycle.

La détente et la compression sont liées à l'hydraulique de la suspension. On règle la détente et la compression en agissant sur des vannes favorisant ou non le passage de l'huile au sein de la suspension.

La détente concerne l'amortissement lorsque le cycle remonte et donc lorsque les suspensions se détendent, tandis que la compression concerne l'amortissement lorsque le cycle descend et se tasse, et donc lorsque les suspensions se compriment.

L'invention porte plus particulièrement sur le réglage de la compression des suspensions.

On connait des kits de suspensions à compression ajustable pour un véhicule à roues comportant un guidon, ledit kit de suspensions comportant :
- une première suspension hydraulique à compression ajustable comprenant un premier organe d'ajustement de la compression configuré pour augmenter la compression de la première suspension lorsqu'il est actionné dans un premier sens et pour réduire la compression de la première suspension lorsqu'il est actionné dans un second sens, opposé au premier sens ;
- une seconde suspension hydraulique à compression ajustable comprenant un second organe d'ajustement de la compression configuré pour augmenter la compression de la seconde suspension lorsqu'il est actionné dans un premier sens et pour réduire la compression de la seconde suspension lorsqu'il est actionné dans un second sens, opposé au premier sens ;
- un dispositif d'actionnement des première et seconde suspensions présentant au moins une première position et une deuxième position, distincte de la première position ;
- une première portion de câble ayant une première extrémité reliée au dispositif d'actionnement et une seconde extrémité reliée au premier organe d'ajustement ; et
- une seconde portion de câble ayant une première extrémité reliée au dispositif d'actionnement et une seconde extrémité reliée au second organe d'ajustement.

Le document US 2005/0252330 décrit notamment un tel kit de suspensions comportant un dispositif d'actionnement des suspensions avant et arrière d'un vélo, fixé au guidon dudit vélo. Ce dispositif d'actionnement est relié à la suspension avant du vélo par un premier câble et à la suspension arrière du vélo par un second câble. Ce dispositif d'actionnement comporte en outre un levier qui, lorsqu'il est mis dans une première position, permet de déplacer simultanément les deux câbles dans une même première direction. Ce déplacement simultané des deux câbles dans la première direction augmente la compression des suspensions avant et arrière. Inversement, lorsque le levier est amené dans une seconde position, le dispositif d'actionnement déplace les deux câbles dans une même deuxième direction. Ceci réduit la compression des suspensions avant et arrière.

En revanche, il est nécessaire d'appliquer un effort important sur le levier de ce dispositif d'actionnement de manière à pouvoir déplacer simultanément les deux câbles dans la même direction, notamment dans la première direction, et ainsi augmenter la compression des suspensions avant et arrière. Un inconvénient de ce type de dispositif est qu'il devient de plus en plus dur à actionner après une utilisation prolongée.

De plus, dans ce dispositif connu, les câbles reliant les suspensions avant et arrière au dispositif d'actionnement glissent dans des gaines, de sorte que des frottements apparaissent entre les câbles et les gaines. On comprend que ces contraintes obligent l'utilisateur à appliquer un effort d'autant plus important sur le levier de manière à ajuster la compression des suspensions.

### Objet et résumé de l'invention

Un objet de la présente invention est de proposer un kit de suspensions à compression ajustable, pour un véhicule à roues comportant un guidon, remédiant aux inconvénients cités précédemment et permettant notamment de réduire l'effort que doit appliquer l'utilisateur pour augmenter ou réduire la compression de la première et de la seconde suspensions.

L'invention atteint son but par le fait que le dispositif d'actionnement est configuré pour déplacer la première portion de câble dans une première direction de façon à actionner le premier organe d'ajustement dans le premier sens et pour déplacer la seconde portion de câble dans une deuxième direction, opposée à la première direction, de façon à actionner le second organe d'ajustement dans le premier sens, lorsque ledit dispositif d'actionnement est amené de ladite première position à ladite deuxième position, afin d'augmenter la compression de la première suspension et de la seconde suspension, et le dispositif d'actionnement étant configuré pour déplacer la première portion de câble dans la deuxième direction de façon à actionner le premier organe d'ajustement dans le second sens et pour déplacer la seconde portion de câble dans la première direction de façon à actionner le second organe d'ajustement dans le second sens, lorsque ledit dispositif d'actionnement est amené de ladite deuxième position à ladite première position, afin de réduire la compression de la première suspension et de la seconde suspension.

Sans sortir du cadre de l'invention, le véhicule peut être un cycle tel un vélo ou un deux-roues motorisé. En outre, le guidon du véhicule s'étend suivant un axe et peut être muni d'une poignée de préhension permettant à l'utilisateur de manipuler le guidon et ainsi diriger le véhicule.

Contrairement aux suspensions configurées de manière conventionnelle, utilisées dans l'art antérieur, le kit de suspensions selon l'invention comporte une première suspension et une seconde suspension dont les premier et second organes d'ajustement fonctionnent de façon inversée.

En effet, le déplacement de la première portion de câble dans une première direction a pour effet d'actionner ledit premier organe d'ajustement, dans le premier sens. De préférence, le déplacement de la première portion de câble dans la première direction a pour effet d'exercer un effort sur le premier organe d'ajustement. En parallèle, le déplacement de la seconde portion de câble dans une deuxième direction, opposée à la première direction, permet l'actionnement du second organe d'ajustement dans le premier sens. De préférence, mais non exclusivement, le déplacement de la seconde portion de câble dans la deuxième direction a pour effet d'autoriser l'actionnement du second organe d'ajustement dans le premier sens, encore de préférence autorise le déplacement du second organe d'ajustement dans le premier sens. Alternativement, le déplacement de la seconde portion de câble dans la deuxième direction a pour effet de déplacer le second organe d'ajustement dans le second sens.

Le kit de suspensions selon l'invention permet donc d'augmenter simultanément la compression de la première et de la seconde suspensions.

Inversement, le déplacement de la première portion de câble dans la deuxième direction permet l'actionnement du premier organe d'ajustement de la première suspension dans le second sens. De préférence, mais non exclusivement, le déplacement de la première portion de câble dans la deuxième direction a pour effet d'autoriser l'actionnement du premier organe d'ajustement dans le second sens, encore de préférence autorise le déplacement du premier organe d'ajustement dans le second sens. Alternativement, le déplacement de la première portion de câble dans la deuxième direction a pour effet de déplacer le premier organe d'ajustement dans le second sens.

Parallèlement, le déplacement de la seconde portion de câble dans la première direction a pour effet d'actionner le second organe d'ajustement de la seconde suspension dans le second sens. De préférence, le déplacement de la seconde portion de câble dans la première direction a pour effet d'exercer un effort sur le second organe d'ajustement.

Ceci a pour effet de réduire la compression de la première et de la seconde suspensions.

Aussi, le dispositif fonctionne de manière symétrique, en ce sens que, avantageusement, l'utilisateur exerce sensiblement le même effort pour augmenter la compression que pour la diminuer.

De préférence mais de manière non limitative, l'actionnement du premier organe d'ajustement et du second organe d'ajustement se fait par déplacement desdits organes d'ajustement. Encore de préférence, ce déplacement peut être un mouvement de rotation ou un mouvement de translation desdits organes d'ajustement.

Dans la première position du dispositif d'actionnement, les première et seconde suspensions ont une compression faible, elles sont alors dites libérées et permettent d'amortir les chocs subis par le véhicule suivant les irrégularités du terrain.

Dans la deuxième position du dispositif d'actionnement, les première et seconde suspensions ont une compression importante, elles sont alors dites raffermies et amortissent peu les chocs subis par le véhicule. Cette position est adaptée au déplacement du véhicule sur terrain plat.

Selon un mode de réalisation, les première et seconde portions de câble constituent deux câbles distincts. Selon un autre mode de réalisation, la première portion de câble et la seconde portion de câble constituent un seul et même câble.

De manière avantageuse, la première suspension comporte un premier ressort de rappel qui tend à actionner le premier organe d'ajustement dans le second sens, et la seconde suspension comporte un second ressort de rappel qui tend à actionner le second organe d'ajustement dans le premier sens et le dispositif d'actionnement est configuré pour tirer la première portion de câble selon la première direction tout en relâchant simultanément la seconde portion de câble lorsque ledit dispositif d'actionnement est amené de ladite première position à ladite deuxième position, et le dispositif d'actionnement est configuré pour relâcher la première portion de câble tout en tirant simultanément la seconde portion de câble selon la première direction lorsque ledit dispositif d'actionnement est amené de ladite deuxième position à ladite première position.

Le déplacement de la première portion de câble, respectivement de la seconde portion de câble dans ladite première direction correspond donc à un déplacement suivant une direction de traction de la première portion de câble, respectivement de la seconde portion de câble, vers le dispositif d'actionnement. Aussi, le passage de la première position à la deuxième position, respectivement le passage de la deuxième position à la première position, entraine une traction sur la première portion de câble, respectivement sur la seconde portion de câble.

De même, le déplacement de la première portion de câble, respectivement de la seconde portion de câble dans ladite deuxième direction correspond à un déplacement suivant une direction de relâchement de la première portion de câble, respectivement de la seconde portion de câble, opposée à la direction de traction, et donc opposée au dispositif d'actionnement.

Durant l'étape de montage, le kit de suspensions selon l'invention est avantageusement configuré de sorte que, lorsque le premier ressort de rappel est tendu, le second ressort de rappel est amené sensiblement en position de repos. Inversement, lorsque le second ressort de rappel est tendu, le premier ressort de rappel est amené sensiblement en position de repos.

Lors du passage de la première à la deuxième position du dispositif d'actionnement, la traction sur la première portion de câble entraine l'actionnement du premier organe d'ajustement dans le premier sens. Ceci a pour conséquence d'augmenter la compression de la première suspension. Dans le même temps, le premier ressort de rappel est mis en tension.

En parallèle, la seconde portion de câble est relâchée et le second ressort de rappel, qui est en tension, exerce un effort de rappel sur le second organe d'ajustement, ce qui entraine l'actionnement de ce dernier dans le premier sens. La compression de la seconde suspension augmente alors et le second ressort de rappel retrouve sensiblement sa position de repos.

De manière similaire, lors du passage de la deuxième position à la première position du dispositif d'actionnement, la traction sur la seconde portion de câble entraine l'actionnement du second organe d'ajustement, dans le second sens. Ceci a pour conséquence de réduire la compression de la seconde suspension. De plus, le second ressort de rappel est mis en tension.

Parallèlement, la première portion de câble est relâchée et le premier ressort de rappel, qui est en tension, exerce un effort de rappel sur le premier organe d'ajustement, ce qui entraine l'actionnement de ce dernier dans le second sens. La compression de la première suspension est réduite et le premier ressort de rappel retrouve alors sensiblement sa position de repos.

De manière particulièrement avantageuse, lorsqu'il est actionné dans le premier sens, le second organe d'ajustement, soumis à l'effort de rappel du second ressort, exerce également un effort de rappel sur la seconde portion de câble. Cet effort de rappel facilite l'amenée en deuxième position du dispositif d'actionnement.

De manière similaire, lorsqu'il est actionné dans le second sens, le premier organe d'ajustement, soumis à l'effort de rappel du premier ressort, exerce également un effort de rappel sur la première portion de câble. Cet effort de rappel facilite l'amenée en première position du dispositif d'actionnement.

On constate que les dispositifs de l'art antérieur sont configurés de sorte qu'il est nécessaire de tirer simultanément sur les deux portions de câbles de manière à augmenter la compression de la première et la de seconde suspensions. Or, dans cette configuration, le premier ressort de rappel et le second ressort de rappel s'opposent tous deux à la traction des deux portions de câbles et donc à l'actionnement du dispositif. L'actionnement de ce type de dispositif est donc très compliqué.

Le kit de suspensions selon l'invention facilite donc l'actionnement du dispositif d'actionnement et l'augmentation ou la réduction de la compression de la première suspension et de la seconde suspension. L'augmentation et la réduction de la compression de la première suspension et de la seconde suspension se fait donc en un seul geste de l'utilisateur, de manière simultanée, et sans effort.

De manière non limitative, la première suspension peut être une suspension avant disposée au niveau de la fourche du véhicule tandis que la seconde suspension est une suspension arrière du véhicule jouant le rôle d'amortisseur. De même, la première suspension peut être une suspension arrière du véhicule tandis que la seconde suspension est une suspension avant du véhicule.

Avantageusement, le dispositif d'actionnement comprend en outre un corps principal ayant une première extrémité et une seconde extrémité, ledit corps principal comportant un manchon de fixation du dispositif d'actionnement au guidon du véhicule, disposé au niveau de la première extrémité du corps principal et s'étendant suivant un axe.

Le manchon de fixation permet de fixer le corps principal au guidon du vélo, de sorte que l'axe du manchon de fixation est confondu avec l'axe du guidon. De cette manière, le corps principal est maintenu immobile par rapport au guidon. De préférence, le corps principal est fixé au guidon à proximité de la poignée de préhension, de sorte que le dispositif d'actionnement s'étend également à proximité de la poignée de préhension. De cette manière, l'utilisateur peut actionner les première et seconde suspensions sans lâcher le guidon, ni descendre du véhicule.

De préférence, le corps principal comporte une portion de guidage de la première portion de câble et de la seconde portion de câble, disposée au niveau de la seconde extrémité du corps principal.

La portion de guidage permet de guider l'entrée de la première portion de câble et de la seconde portion de câble dans le corps principal, de sorte que ces deux portions de câbles s'étendent dans le corps principal. Selon une variante, la portion de guidage peut être déportée radialement par rapport à l'axe du guidon.

De manière avantageuse, la portion de guidage est configurée de sorte que la première portion de câble et la seconde portion de câble entrent dans le corps principal, selon une direction sensiblement parallèle à l'axe du manchon de fixation. On comprend donc que la première portion de câble et la seconde portion de câble entrent dans le corps principal sensiblement parallèlement au guidon du véhicule. Un intérêt est de s'assurer que les portions de câbles s'étendent latéralement et non vers l'avant du véhicule, de manière à réduire l'encombrement causé par le dispositif.

De manière non limitative, les première et seconde portions de câbles entrent dans le corps principal sensiblement parallèles l'une par rapport à l'autre. De plus, toujours de manière non limitative, la portion de guidage s'étend dans une direction opposée à la poignée de préhension, de sorte que les portions de câbles s'étendent également dans une direction opposée à la poignée de préhension et qu'elles ne risquent pas de gêner l'utilisateur lorsqu'il tient ladite poignée de préhension.

Préférentiellement, le dispositif d'actionnement comporte des moyens de commande, configurés pour déplacer simultanément les première et seconde portions de câbles. Un intérêt est de pouvoir amener facilement le dispositif d'actionnement de la première position à la deuxième position, afin d'augmenter la compression de la première et de la seconde suspensions, ou de la deuxième position à la première position, afin de réduire la compression de la première et de la seconde suspensions. Les moyens de commande permettent d'agir rapidement et de manière simultanée sur les deux portions de câbles.

De préférence, l'actionnement des moyens de commande pour augmenter ou réduire la compression de la première suspension et de la seconde suspension se fait par une seule manipulation de l'utilisateur.

De manière particulièrement avantageuse, les moyens de commande sont rotatifs. Un intérêt est de faciliter l'actionnement des moyens de commande en permettant à l'utilisateur de continuer de tenir la poignée de préhension lors de l'actionnement desdits moyens de commande.

De préférence et de manière non limitative, les moyens de commande sont rotatifs selon l'axe du guidon et sont disposés à proximité de la poignée de préhension. Dans cette configuration, il est aisé pour l'utilisateur d'agir sur les moyens d'actionnement, par exemple à l'aide de son pouce, tandis que ses autres doigts continuent de tenir la poignée de préhension.

Avantageusement, les moyens de commande comprennent en outre une bague, et le corps principal comporte une portion cylindrique, la bague étant montée pivotante sur ladite portion cylindrique, ladite bague présentant au moins une position de compression et une position de libération, ladite position de compression correspondant à ladite deuxième position du dispositif d'actionnement et ladite position de libération correspondant à ladite première position du dispositif d'actionnement.

Préférentiellement, de manière non limitative, la portion cylindrique fait saillie suivant l'axe du manchon de fixation, de sorte que la bague pivote autour de la portion cylindrique selon l'axe du manchon de fixation et donc selon l'axe du guidon du véhicule. Ladite position de compression et ladite position de libération de la bague correspondent à deux orientations distinctes de la bague, par exemple selon l'axe du manchon de fixation.

Sans sortir du cadre de la présente invention, la bague pourrait prendre davantage de positions. Par exemple, la bague pourrait présenter une position de blocage correspondant à une troisième position du dispositif d'actionnement, dans laquelle le dispositif d'actionnement est configuré pour déplacer davantage la première portion de câble dans la première direction et pour déplacer davantage la seconde portion de câble dans la deuxième direction, de manière à augmenter encore la compression des première et seconde suspensions, jusqu'à les bloquer complétement et empêcher ainsi l'effet d'amortissement.

On pourrait également prévoir une ou plusieurs positions intermédiaires entre la première position et la deuxième position, ces positions intermédiaires correspondant à des niveaux de compression intermédiaires des suspensions.

De manière particulièrement avantageuse, la première portion de câble comporte une première tête de câble et la seconde portion de câble comporte une seconde tête de câble, et la bague comporte une première portion d'accueil pour la première tête de câble et une seconde portion d'accueil pour la seconde tête de câble.

De cette manière, entrainer ladite bague en rotation autour de la portion cylindrique du corps principal, par exemple selon l'axe du manchon de fixation, a pour effet de modifier la position de la première portion d'accueil et de la seconde portion d'accueil. Aussi, lorsque la bague est amenée dans sa position de compression, correspondant à la deuxième position du dispositif d'actionnement, la première portion d'accueil exerce un effort de traction sur la première tête de câble de la première portion de câble de sorte que la première portion de câble est tirée. Dans le même temps, la seconde portion d'accueil guide la seconde portion de câble, qui est ainsi relâchée. La rotation de la bague autour de la portion cylindrique, visant à amener ladite bague en position de compression, permet donc d'augmenter simultanément la compression de la première suspension et de la seconde suspension.

Lorsque les premier et second ressorts de rappel sont présents, l'effort de rappel qu'exerce le second organe d'ajustement, lui-même soumis à l'effort de rappel du second ressort de rappel, sur la seconde portion de câble crée, sur la bague, un couple supplémentaire. Ce couple réduit l'effort à exercer sur la bague pour l'entrainer en rotation et pour tirer sur la première portion de câble. Cette configuration facilite donc la mise en deuxième position du dispositif d'actionnement, permettant d'augmenter la compression de la première suspension et de la seconde suspension.

De manière similaire, lorsque la bague est amenée dans sa position de libération, correspondant à la première position du dispositif d'actionnement, la seconde portion d'accueil exerce un effort de traction sur la seconde tête de câble de la seconde portion de câble de sorte que la seconde portion de câble est tirée. Dans le même temps, la première portion d'accueil guide la première portion de câble, qui est ainsi relâchée.

De même, l'effort de rappel qu'exerce le premier organe d'ajustement, lui-même soumis à l'effort de rappel du premier ressort de rappel, sur la première portion de câble crée également, sur la bague, un couple supplémentaire. Ceci réduit l'effort à exercer sur la bague pour l'entrainer en rotation et pour tirer sur la seconde portion de câble. Cette configuration facilite donc la mise en première position du dispositif d'actionnement, permettant de réduire la compression de la première suspension et de la seconde suspension.

Avantageusement, la première portion d'accueil et la seconde portion d'accueil sont espacées angulairement d'un angle inférieur à 180°, de préférence sensiblement égal à 90°, grâce à quoi l'effort qu'exercent la première portion d'accueil et la seconde portion d'accueil, respectivement sur la première tête de câble et la seconde tête de câble, est décuplé. Ceci réduit l'effort à exercer sur la bague pour l'entrainer en rotation et pour tirer sur la première portion de câble ou la seconde portion de câble, lors de la mise en première ou deuxième position du dispositif d'actionnement.

De préférence et de manière non limitative, la première portion d'accueil et la seconde portion d'accueil sont configurées pour maintenir la première tête de câble et la seconde tête de câble en regard l'une de l'autre, de sorte que la première portion de câble et la seconde portion de câble s'étendent de part et d'autre de la bague, le long d'une paroi périphérique extérieure de la bague.

Dans un mode de réalisation alternatif, la première portion de câble et la seconde portion de câble appartiennent à un seul et même câble et la bague comporte une portion d'attache pour connecter ledit câble à ladite bague.

Dans cette variante, les portions de câble situées de part et d'autre de la portion d'attache constituent respectivement la première portion de câble et la seconde portion de câble décrites dans le mode de réalisation précédent.

Aussi, dans cette variante, le fonctionnement du dispositif d'actionnement est similaire à celui du mode de réalisation précédemment décrit. En particulier, lorsque la bague est amenée dans sa position de compression, la portion d'attache exerce un effort de traction sur la première portion de câble, de sorte que la première portion de câble est tirée. Dans le même temps, la portion d'attache guide la seconde portion de câble, qui est ainsi relâchée. La rotation de la bague autour de la portion cylindrique, visant à amener ladite bague en position de compression, permet donc, là encore, d'augmenter simultanément la compression de la première suspension et de la seconde suspension.

De manière similaire, lorsque la bague est amenée dans sa position de libération, la portion d'attache exerce un effort de traction sur la seconde portion de câble de sorte que la seconde portion de câble est tirée. Dans le même temps, la portion d'attache guide la première portion de câble, qui est ainsi relâchée.

Sans sortir du cadre de l'invention, la portion d'attache peut maintenir le câble connecté à la bague par pincement.

De préférence, le câble est connecté à la bague sensiblement à la moitié de sa longueur ce qui facilite l'actionnement du câble et l'enroulement du câble autour de la bague.

De manière avantageuse, le dispositif d'actionnement comprend au moins un élément de maintien permettant de maintenir la bague dans ladite position de compression ou dans ladite position de libération. Un intérêt est d'empêcher que la bague ne pivote involontairement autour de la portion cylindrique, ce qui pourrait entrainer une augmentation ou une réduction intempestive de la compression des première et seconde suspensions.

De manière non limitative, ledit au moins un élément de maintien est configuré de sorte à opposer une résistance suffisante pour maintenir la bague dans ladite position de compression ou dans ladite position de libération, sans toutefois empêcher ladite bague de passer d'une position à l'autre. De cette manière, un effort peu important sur la bague ou sur ledit au moins un élément de maintien permet de faire passer la bague de ladite position de compression à ladite position de libération ou inversement.

Préférentiellement, ledit au moins un élément de maintien comprend une lame ressort fixée à la paroi périphérique extérieure de la bague et coopérant avec au moins une première encoche et une seconde encoche ménagées sur un rebord du corps principal. On comprend que lorsque la lame ressort coopère avec la première encoche, la bague est maintenue dans sa position de compression tandis que lorsque la lame ressort coopère avec la seconde encoche, la bague est maintenue dans sa position de libération. La flexibilité de la lame ressort lui permet de coopérer avec les deux encoches mais également de s'en libérer aisément.

De préférence, lesdits moyens de commande comprennent en outre un élément d'actionnement comportant des moyens d'entraînement configurés pour entraîner la bague en rotation. Un intérêt est de permettre à l'utilisateur d'entraîner facilement la bague en rotation. Encore de préférence, l'élément d'actionnement est une molette d'entrainement s'étendant annulairement autour de la bague. Les moyens d'entrainement permettent de transmettre à la bague un couple exercé par l'utilisateur sur la molette d'entrainement. Selon une variante, les moyens d'entrainement comprennent une première série de crans disposés sur la molette d'entrainement et destinée à coopérer avec une seconde série de crans disposée sur la bague, de manière à entrainer la bague en rotation.

De préférence, la molette d'entrainement est disposée suivant l'axe du guidon, à proximité de la poignée de préhension de sorte que l'utilisateur peut actionner ladite molette d'entrainement sans déplacer sa main, ni lâcher la poignée de préhension. Par ailleurs, on comprend qu'il est aisé pour l'utilisateur de faire pivoter la molette d'entrainement selon l'axe du manchon de fixation, en la saisissant entre son pouce et son index, tandis que ses autres doigts continuent de tenir la poignée de préhension.

De manière alternative, l'élément d'actionnement peut être un levier.

L'invention porte également sur un vélo muni du kit de suspensions à compression ajustable décrit précédemment.

### Brève description des dessins

L'invention sera mieux comprise à la lecture de la description qui suit d'un mode de réalisation de l'invention donné à titre d'exemple non limitatif, en référence aux dessins annexés, sur lesquels :
- la figure **1** illustre un vélo équipé d'un exemple d'un kit de suspensions à compression ajustable, selon l'invention ;
- la figure **2** représente un dispositif d'actionnement des suspensions à compression ajustable selon l'invention, fixé au guidon d'un vélo ;
- la figure **3** est une vue en perspective du dispositif d'actionnement de la figure **2****;**
- la figure **4** est une vue en éclaté du dispositif d'actionnement de la figure **3** ;
- la figure **5** représente le corps principal, muni d'un câble, ainsi que la bague de la figure **4** ;
- la figure **6** représente la bague de la figure **4** ;
- la figure **7A** est un schéma cinématique du kit de suspensions selon l'invention, dont le dispositif d'actionnement est en première position ;
- la figure **7B** est un schéma cinématique du kit de suspensions selon l'invention, dont le dispositif d'actionnement est en deuxième position ; et
- la figure **8** illustre un second mode de réalisation du dispositif d'actionnement.

### Description détaillée de l'invention

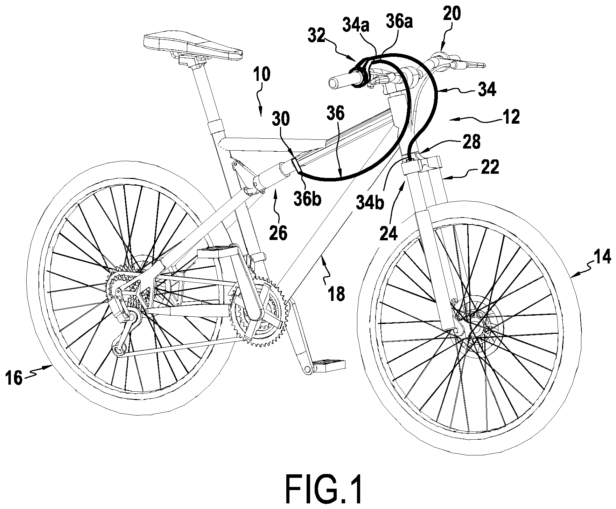

Sur la figure **1****,** on a représenté un vélo **10** muni d'un kit de suspensions à compression ajustable **12** selon l'invention. De manière connue, le vélo **10** comporte en outre une roue avant **14,** une roue arrière **16,** un cadre **18** et un guidon **20** relié à la roue avant **14** par l'intermédiaire d'une fourche **22.** Le kit de suspensions à compression ajustable **12** comprend en outre une première suspension à compression ajustable **24** disposée à l'avant du vélo **10,** au niveau de la fourche **22,** et une seconde suspension à compression ajustable **26** disposée en partie arrière du cadre **18,** tel un amortisseur de vélo conventionnel.

La première suspension **24** comprend un premier organe d'ajustement **28** configuré pour augmenter la compression de la première suspension **24** lorsqu'il est actionné, dans cet exemple en étant tiré, dans un premier sens et pour réduire la compression de la première suspension **24** lorsqu'il est actionné dans un second sens, par exemple en étant relâché. Lorsque la compression de la première suspension **24** est importante, elle amortit peu les chocs subis par le vélo **10,** tandis que lorsque la compression de la première suspension **24** est faible, elle permet d'amortir les chocs subis par le vélo **10.**

La seconde suspension **26** comprend un second organe d'ajustement **30** configuré pour augmenter la compression de la seconde suspension **26** lorsqu'il est actionné, par exemple en état relâché, dans un premier sens et pour réduire la compression de la seconde suspension **26** lorsqu'il est actionné dans un second sens, par exemple en étant tiré.

La première suspension **24** et la seconde suspension **26** comprennent respectivement un premier ressort de rappel **27** et un second ressort de rappel **29.** Les premier et second ressorts de rappel **27,29** exercent un effort de rappel **F1,F2** respectivement sur le premier organe d'ajustement **28** et sur le second organe d'ajustement **30.**

Sur la figure **1****,** on constate que le kit de suspensions à compression ajustable **12** comprend également un dispositif d'actionnement **32** de la première suspension **24** et de la seconde suspension **26,** ledit dispositif d'actionnement **32** étant fixé au guidon **20** du vélo.

Le kit de suspensions à compression ajustable **12** comprend par ailleurs un premier câble **34** dont une première extrémité **34a** est reliée au dispositif d'actionnement **32** et dont une seconde extrémité **34b** est reliée au premier organe d'ajustement **28** de la première suspension **24.** De même, le kit de suspensions à compression ajustable **12** comprend un second câble **36** dont une première extrémité **36a** est reliée au dispositif d'actionnement **32** et dont une seconde extrémité **36b** est reliée au second organe d'ajustement **30** de la seconde suspension **26.**

De manière non limitative, la première extrémité **34a** du premier câble **34** et la première extrémité **36a** du second câble **36** sont munies respectivement d'une première tête de câble **Ca** et d'une seconde tête de câble **Cb** pouvant être sphériques ou cylindriques.

Le dispositif d'actionnement **32** présente une première position et une deuxième position. Lorsqu'il est amené de la première position à la deuxième position, ledit dispositif d'actionnement est notamment configuré pour tirer le premier câble **34** dans une première direction, afin d'actionner, par exemple en tirant, le premier organe d'ajustement **28** de la première suspension **24** dans le premier sens, tout en relâchant simultanément le second câble **36,** qui se déplace alors dans une deuxième direction, afin d'actionner le second organe d'ajustement **30** de la seconde suspension **26** dans le premier sens. On comprend que cette mise en deuxième position du dispositif d'actionnement **32** permet d'augmenter simultanément la compression de la première suspension **24** et de la seconde suspension **26.**

Inversement, lorsqu'il est amené de la deuxième position à la première position, ledit dispositif d'actionnement **32** est notamment configuré pour relâcher le premier câble **34,** qui se déplace alors dans une deuxième direction, afin d'actionner le premier organe d'ajustement **28** de la première suspension **24** dans le second sens, tout en tirant simultanément le second câble **36,** dans la première direction, afin d'actionner le second organe d'ajustement **30** de la seconde suspension **26** dans le second sens. On comprend que cette mise en première position du dispositif d'actionnement **32** permet de réduire simultanément la compression de la première suspension et de la seconde suspension, en un seul geste de l'utilisateur.

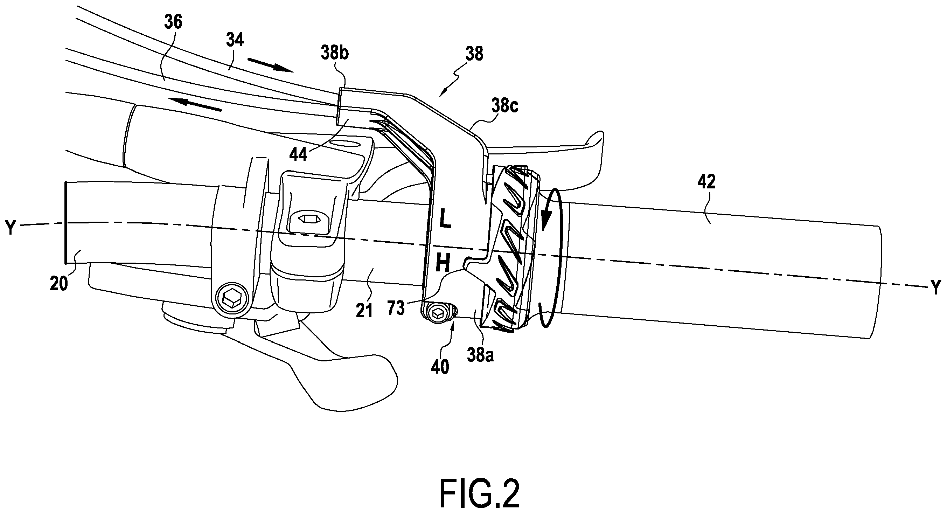

La figure **2** illustre un dispositif d'actionnement selon l'invention, fixé à un tube **21** du guidon **20** du vélo **10,** ledit tube ayant un axe **Y.** Le dispositif d'actionnement **20** comporte en outre un corps principal **38** qui présente une première extrémité **38a,** une seconde extrémité **38b,** opposée à la première extrémité **38a,** et une portion coudée **38c.**

La portion coudée **38c** du corps principal est située entre la première extrémité **38a** et la seconde extrémité **38b** du corps principal **38.** La première extrémité **38a** du corps principal **38** est munie d'un manchon de fixation **40** permettant de fixer le dispositif d'actionnement au tube **21** du guidon **20.**

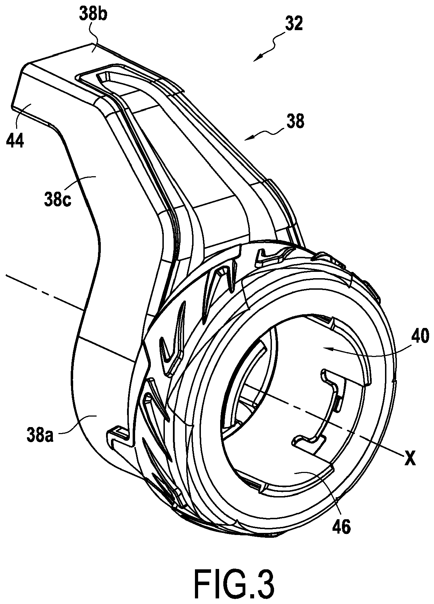

Comme on le constate sur la figure **3****,** Le manchon de fixation **40** présente la forme générale d'un cylindre qui s'étend selon un axe **X.** Le manchon de fixation **40** est destiné à enserrer le tube **21** du guidon **20** du vélo, de sorte que l'axe **X** du manchon de fixation **40** est confondu avec l'axe **Y** du tube **21** du guidon **20.**

En se référant de nouveau à la figure **2****,** on remarque que, de manière non limitative, le tube **21** du guidon **20** est muni d'une poignée de préhension **42** s'étendant suivant un axe longitudinal également confondu avec l'axe **Y** du tube **21** du guidon **20.** La poignée de préhension **42** est disposée à proximité du dispositif d'actionnement **32** de sorte que l'utilisateur n'a pas besoin de déplacer sa main ou de lâcher la poignée de préhension **42** pour agir sur le dispositif d'actionnement **32.**

Le corps principal **38** comprend une portion de guidage **44** du premier câble **34** et du second câble **36,** disposée au niveau de la seconde extrémité **38b** du corps principal. Le premier câble **34** et le second câble **36** entrent dans le corps principal **38,** sensiblement parallèles l'un par rapport à l'autre, au niveau de la portion de guidage **44.** En outre, la portion de guidage **44** est déportée radialement par rapport à l'axe **X** du manchon de fixation **40** et est configurée de sorte que le premier câble **34** et le second câble **36** entrent dans le corps principal selon une direction sensiblement parallèle à l'axe **X** du manchon de fixation **40.** On comprend que les premier et second câbles s'étendent latéralement, sensiblement parallèlement au guidon **20** du vélo, de manière à réduire l'encombrement causé par le dispositif d'actionnement **32.**

De plus, la portion de guidage **44** s'étend dans une direction opposée à la poignée de préhension **42.** Aussi, le premier câble **34** et le second câble **36** ne risquent pas de gêner l'utilisateur lorsqu'il tient la poignée de préhension **42.**

Le corps principal **38** comprend en outre une portion cylindrique **46** faisant saillie selon l'axe **X** du manchon de fixation, dans une direction opposée à la direction selon laquelle s'étend la portion de guidage **44** du corps principal **38** (voir figure **3**). Le corps principal comprend, de plus, un rebord **47,** sensiblement circulaire, faisant saillie suivant l'axe **X** du manchon de fixation **40,** dans le prolongement dudit manchon de fixation, sensiblement autour de la portion cylindrique **46.**

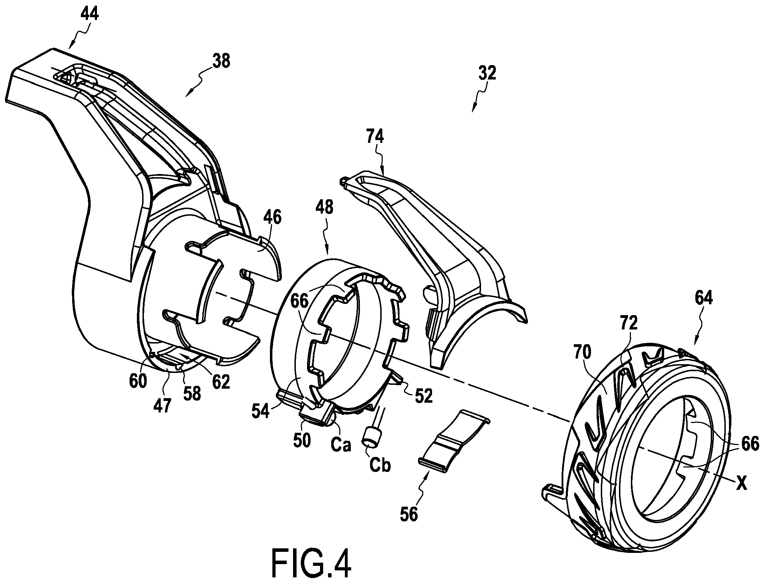

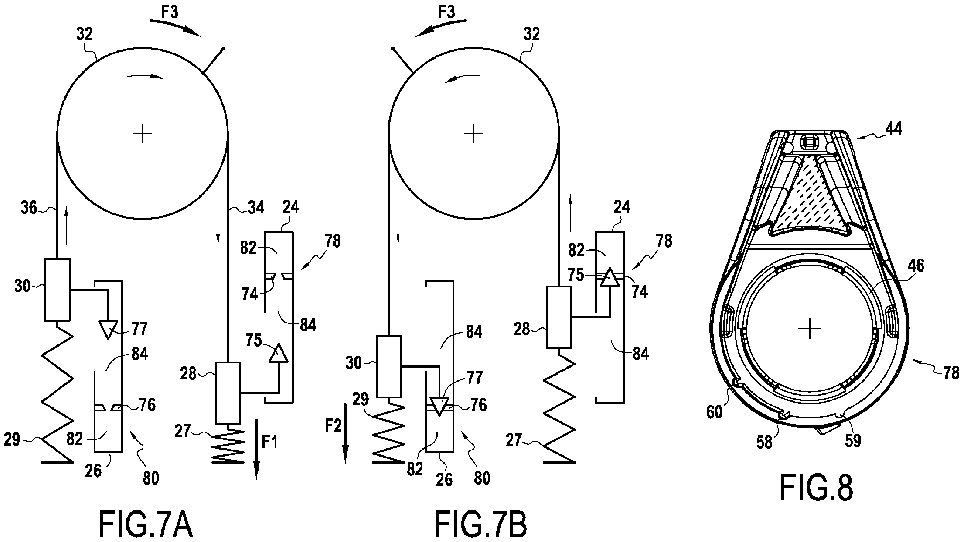

Comme on peut le voir sur la figure **4****,** le dispositif d'actionnement **32** comporte en outre une bague **48** montée pivotante autour de la portion cylindrique **46** du corps principal **38.** Dans cet exemple non limitatif, la bague **48** pivote annulairement autour de la portion cylindrique **46** et présente une position de compression et une position de libération. La position de compression correspond à la deuxième position du dispositif d'actionnement, dans laquelle la compression des suspensions est importante. La position de libération correspond à la première position du dispositif d'actionnement, dans laquelle la compression des suspensions est faible. Sans sortir du cadre de l'invention, la bague **48** pourrait prendre davantage de positions, comme illustré sur la variante de la figure **8****.**

La bague **48** comprend une première portion d'accueil **50** pour la première tête de câble **Ca** du premier câble **34** et une seconde portion d'accueil **52** pour la seconde tête de câble **Cb** du second câble **36.**

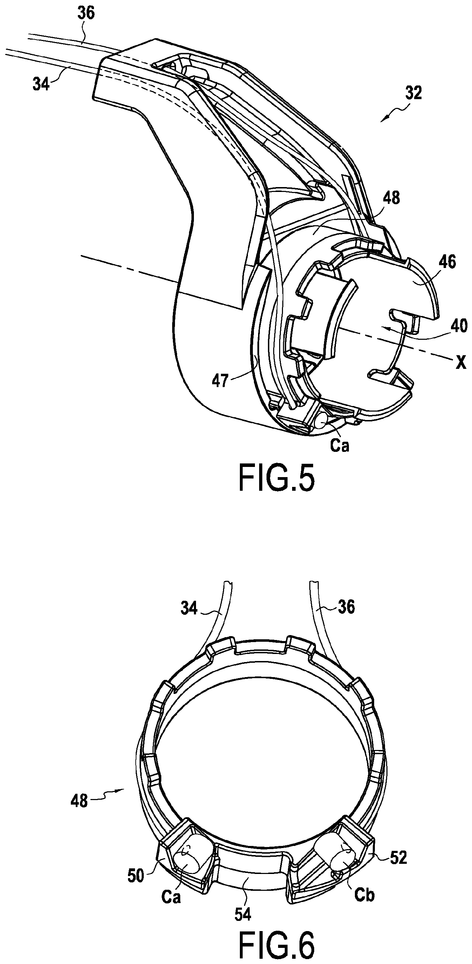

Comme on peut le voir sur la figure **6****,** la première portion d'accueil **50** et la seconde portion d'accueil **52** s'étendent radialement depuis une paroi périphérique extérieure **54** de la bague **48,** de sorte à constituer un premier et un second passages permettant de maintenir la première tête de câble **Ca** et la seconde tête de câble **Cb** tangentiellement à la bague **48.** En particulier la première portion d'accueil **50** et la seconde portion d'accueil **52** sont configurées pour maintenir la première tête de câble **Ca** et la seconde tête de câble **Cb** sensiblement en regard l'une de l'autre, de sorte que le premier câble **34** et le second câble **36** s'étendent de part et d'autre de la bague **48,** en bordant la paroi périphérique extérieure **54.**

La première portion d'accueil **50** et la seconde portion d'accueil **52** sont espacées angulairement d'un angle sensiblement égal à 90°.

En se référant à la figure **5****,** on constate que le premier câble **34** et le second câble **36** entrent dans le corps principal **38** au niveau de la portion de guidage **44,** qu'ils traversent le corps principal le long de la portion coudée **38c,** et qu'ils s'étendent de part et d'autre de la bague **48** selon la configuration expliquée précédemment.

Le dispositif d'actionnement comporte, de plus, une lame ressort **56** fixée à la paroi périphérique extérieure **54** de la bague **48** et configurée pour coopérer avec une première encoche **58** ou une seconde encoche **60** ménagées dans une paroi intérieure **62** du rebord **47** du corps principal **38.**

Le dispositif d'actionnement **32** comprend par ailleurs une molette d'entrainement **64** configurée pour s'étendre annulairement autour de la bague **48,** selon l'axe **X** du manchon de fixation **40.** La molette d'entrainement **64** comprend une première série de crans **66** destinée à coopérer avec une seconde série de crans **68** disposée sur la bague, de manière à entrainer la bague **48** en rotation. La première série de crans **66** et la seconde série de crans **68** constituent donc des moyens d'entrainement de la bague.

De préférence, la molette d'entrainement **64** est disposée à proximité de la poignée de préhension **42** de sorte que l'utilisateur peut actionner ladite molette d'entrainement **64** sans déplacer sa main, ni lâcher la poignée de préhension **42.** Par ailleurs, on comprend qu'il est aisé pour l'utilisateur de faire pivoter la molette d'entrainement **64** selon l'axe **Y** du tube **21** du guidon **20,** en la saisissant entre son pouce et son index, tandis que ses autres doigts continuent de tenir la poignée de préhension **42.**

En outre, une paroi périphérique extérieure **70** de la molette d'entrainement **64** est munie d'éléments d'accroche **72** permettant une meilleure prise en main de ladite molette d'entrainement. La molette d'entrainement comporte également une portion d'indication **73** s'étendant sensiblement parallèlement à l'axe **X** du manchon de fixation **40,** depuis la paroi périphérique extérieure **70** de la molette d'entrainement **64.** La portion d'indication **73** permet de renseigner l'utilisateur sur l'état actuel de la première suspension **24** et de la seconde suspension **26.**

De manière non limitative, le dispositif d'actionnement **32** comprend en outre un cache **74** permettant de fermer la portion coudée **38c** et ainsi favoriser le guidage du premier câble **34** et du second câble **36** dans le corps principal **38.**

Dans la deuxième position du dispositif d'actionnement **32,** la bague **48** est disposée dans la position de compression, dans laquelle la lame ressort **56** coopère avec la première encoche **58** du rebord **47** du corps principal **38.** Dans cette position, la bague est orientée de sorte que le premier câble **34** est tiré, selon la première direction, tandis que le second câble **36** est relâché. De cette manière, la compression de la première suspension **24** et de la seconde suspension **26** est augmentée. Par ailleurs, la portion d'indication **73** est disposée en regard d'une indication **H** (pour High, ou haute en français) disposée sur la paroi extérieure du manchon de fixation **40,** indiquant ainsi à l'utilisateur que la compression de la première suspension **24** et de la seconde suspension **26** est importante.

Comme on peut le voir sur la figure **2****,** pour passer de cette deuxième position du dispositif d'actionnement **32** à la première position du dispositif d'actionnement, l'utilisateur actionne la molette d'entrainement **64** en lui appliquant un couple. La bague est alors entrainée en rotation par ladite molette d'entrainement **64** par l'intermédiaire de la première série de crans **68** coopérant avec la seconde série de crans **70.** De cette manière, la bague **48** pivote autour de l'axe **X** du manchon de fixation **40** et donc autour de la portion cylindrique **46** selon l'axe du tube **21** du guidon **20,** ici dans le sens horaire. Cette rotation de la bague **48** a pour conséquence d'appliquer sur le premier câble **34** et le second câble **36** un effort tangentiel à la paroi périphérique extérieure **54** de la bague, dans la direction de rotation de la bague. Ceci permet à la bague de relâcher le premier câble **34** tout en tirant simultanément le second câble **36,** selon la première direction, ces deux câbles coulissant dans le corps principal. Il s'ensuit que la compression de la première suspension **24** et de la seconde suspension **26** est réduite simultanément, suite à un unique actionnement de la molette d'entrainement **64.**

On comprend par ailleurs que la bague **48** pivote autour de l'axe **X** du manchon de fixation **40** jusqu'à ce que la lame ressort **56** coopère avec la seconde encoche **60** du rebord **47** du corps principal **38,** permettant alors de maintenir la bague dans la position de libération, correspondant à la première position du dispositif d'actionnement **32.**

On comprend également que la course angulaire de la bague **48** entre la position de compression et la position de libération, et donc entre la deuxième position et la première position du dispositif d'actionnement **32,** est fonction de la distance angulaire séparant la première encoche **58** et la seconde encoche **60.** De préférence, la course angulaire de la bague **48** autour de l'axe **X** du manchon de fixation **40,** entre la première position et la deuxième position est de sensiblement 70° Dans cet exemple de passage de la deuxième position à la première position du dispositif d'actionnement **32,** l'effort qu'exerce le premier ressort de rappel sur le premier câble **34** crée, sur la bague **48,** un couple supplémentaire s'ajoutant au couple exercé par l'utilisateur sur la molette d'entraînement **64.** Ceci réduit l'effort **F3** que doit exercer l'utilisateur pour entrainer la bague en rotation et pour tirer sur le second câble **36.** Ceci facilite donc le passage de la deuxième position à la première position du dispositif d'actionnement, permettant de réduire la compression de la première suspension **24** et de la seconde suspension **26.** Par ailleurs, dans la première position du dispositif d'actionnement **32,** la portion d'indication **73** est disposée en regard d'une indication **L** (pour Low, ou basse en français) disposée sur la paroi extérieure du manchon de fixation **40,** indiquant ainsi à l'utilisateur que la compression de la première suspension **24** et de la seconde suspension **26** est faible.

Le fonctionnement du kit de suspensions selon l'invention sera mieux compris à l'aide des figures **7A** et **7B****,** sous forme de schémas cinématiques où les premier et second organes d'ajustement **28** et **30** sont montés de façon inversée et comportent respectivement une première portion d'obturation **75** et une seconde portion d'obturation **77,** de sections transversales sensiblement triangulaires. Les deux suspensions **24,26** sont schématisées sous la forme d'un premier piston **74** et d'un second piston **76** disposés au sein d'un premier corps de vérin **78** et d'un second corps de vérin **80.** Le premier piston **74** et le second piston **76** comportent tous deux une ouverture centrale laissant passer un fluide, tel que de l'huile, d'une première chambre **82** à une seconde chambre **84** des premier et second corps de vérin **78,80.**

Sur la figure **7A****,** on constate que le dispositif d'actionnement **32** est amené de la deuxième position à la première position, en faisant pivoter la molette d'entrainement **64,** de manière à entrainer la bague **48** en rotation dans le sens horaire. Lors de l'amenée dans cette première position, le dispositif d'actionnement **32** tire sur le second câble **36,** dans la première direction. Cette traction sur le second câble entraine l'actionnement, dans cet exemple par traction, du second organe d'ajustement **30,** dans le second sens. De plus, le second ressort de rappel **29** est mis en tension. Parallèlement, le premier câble **34** est relâché, dans la deuxième direction, et le premier ressort de rappel **27,** qui est initialement en tension, exerce un effort de rappel **F1** sur le premier organe d'ajustement **28,** ce qui entraine l'actionnement de ce dernier, dans le second sens. Le premier ressort de rappel **27** retrouve alors sensiblement sa position de repos.

Les première et seconde portions d'obturation **75,77** des premier et second organes d'ajustement ne viennent pas obturer les ouvertures des premier et second pistons **74,76,** de sorte que la compression de la première suspension **24** et de la seconde suspension **26** est réduite et l'effet d'amortissement continue d'opérer.

Par ailleurs, selon un aspect particulièrement avantageux de l'invention, le premier organe d'ajustement **28** soumis à l'effort de rappel **F1,** exercé par le premier ressort de rappel **27,** exerce également un effort de rappel sur le premier câble **34.** Cet effort de rappel sur le premier câble **34** crée un couple supplémentaire sur la bague **48,** facilitant la mise en première position du dispositif d'actionnement.

En particulier, les efforts de rappel **F1** et **F2** qu'exercent le premier ressort de rappel **27** et le second ressort de rappel **29,** respectivement sur le premier organe d'ajustement **28** et sur le second organe d'ajustement **30,** sont sensiblement égaux, de sorte que ces deux efforts se compensent et s'équilibrent.

De cette manière, l'effort **F3** à appliquer sur le dispositif d'actionnement **32,** et en particulier l'effort à appliquer sur la molette d'entraînement **64** de manière à placer ledit dispositif d'actionnement **32** dans la première position, est fortement réduit.

Par analogie, le comportement est similaire lorsque l'on amène le dispositif d'actionnement **32** depuis la première position vers la deuxième position. Il s'agit alors pour l'utilisateur de faire pivoter la molette d'entrainement **64** dans le sens antihoraire, ce qui entraine la bague **48** dans ce même sens de rotation et tire le premier câble **34,** dans la première direction tout en relâchant simultanément le second câble **36,** qui se déplace alors dans la deuxième direction, de manière à augmenter la compression de la première suspension **24** et de la seconde suspension **26.** La figure **7B** illustre cette mise en deuxième position du dispositif d'actionnement **32.** La traction sur le premier câble **34** entraine l'actionnement du premier organe d'ajustement **28,** dans cet exemple par traction, dans le premier sens. Dans le même temps, le premier ressort de rappel est mis en tension. En parallèle, le second câble **36** est relâché et le second ressort de rappel **29,** qui est initialement en tension, exerce un effort de rappel sur le second organe d'ajustement **30,** ce qui entraine l'actionnement de ce dernier, dans le premier sens. Le second ressort de rappel **29** retrouve alors sensiblement sa position de repos.

Les première et seconde portions d'obturation **75,77** des premier et second organes d'ajustement **28,30** viennent obturer les ouvertures des premier et second pistons **74,76,** de sorte que le fluide ne peut plus passer de la première chambre **82** à la seconde chambre **84.** La compression de la première suspension **24** et de la seconde suspension **26** est augmentée et l'effet d'amortissement est limité. Là encore, le second organe d'ajustement **30** soumis à l'effort de rappel **F2,** exercé par le second ressort de rappel **29,** exerce également un effort de rappel sur le second câble **36.** Cet effort de rappel sur le second câble **36** crée un couple supplémentaire sur la bague **48,** facilitant la mise en deuxième position du dispositif d'actionnement **32.**

De plus, les efforts **F1,F2** qu'exercent le premier et le second ressorts de rappel **27,29,** respectivement sur le premier organe d'ajustement **28** et le second organe d'ajustement **30,** se compensent. La mise en deuxième position du dispositif d'actionnement **32** est donc également facilitée.

Le kit de suspensions **12** selon l'invention facilite donc l'actionnement du dispositif d'actionnement **32** et l'augmentation ou la diminution de la compression de la première suspension **24** et de la seconde suspension **26.**

La figure **8** illustre une variante du corps principal **38** du dispositif d'actionnement **32** selon l'invention, permettant audit dispositif d'actionnement de prendre une troisième position. Dans cet exemple, la première position du dispositif d'actionnement **32** correspond à une faible compression des première et seconde suspensions **24,26,** la deuxième position du dispositif d'actionnement correspond à une forte compression des suspensions, tandis que la troisième position correspond à un état bloqué des suspensions.

Dans cette variante, le corps principal **38** du dispositif d'actionnement **32** comporte une troisième encoche **59** ménagée, comme la première encoche **58** et la seconde encoche **60,** dans la paroi intérieure **62** du rebord **47** du corps principal **38.** La troisième encoche est disposée de sorte que la distance séparant la première encoche **58** et la seconde encoche **60** est sensiblement identique à la distance séparant la seconde encoche **60** et la troisième encoche **59.** La bague **48** pivote autour de l'axe **X** du manchon de fixation **40** jusqu'à ce que la lame ressort **56** coopère avec la troisième encoche **59.** Dans cette position, la bague tire davantage le premier câble **34,** dans la première direction, et relâche davantage le second câble **36,** dans la deuxième direction, de sorte que la compression des suspensions **24,26** est augmentée jusqu'à un niveau de compression dans lequel l'effet d'amortissement réalisé par les suspensions est sensiblement nul, de sorte que la première suspension **24** et la seconde suspension **26** sont considérées bloquées.

## Revendications

1. Kit de suspensions à compression ajustable (12) pour un véhicule (10) à roues comportant un guidon (20), ledit kit de suspensions comportant :
• une première suspension hydraulique à compression ajustable (24) comprenant un premier organe d'ajustement de la compression (28) configuré pour augmenter la compression de la première suspension lorsqu'il est actionné dans un premier sens et pour réduire la compression de la première suspension lorsqu'il est actionné dans un second sens, opposé au premier sens ;
• une seconde suspension hydraulique à compression ajustable (26) comprenant un second organe d'ajustement de la compression (30) configuré pour augmenter la compression de la seconde suspension lorsqu'il est actionné dans un premier sens et pour réduire la compression de la seconde suspension lorsqu'il est actionné dans un second sens, opposé au premier sens ; un dispositif d'actionnement (32) des première et seconde suspensions présentant au moins une première position et une deuxième position, distincte de la première position ;
• une première portion de câble (34) ayant une première extrémité reliée au dispositif d'actionnement et une seconde extrémité reliée au premier organe d'ajustement ; et
• une seconde portion de câble (36) ayant une première extrémité reliée au dispositif d'actionnement et une seconde extrémité reliée au second organe d'ajustement,
**caractérisé en ce que** le dispositif d'actionnement (32) est configuré pour déplacer la première portion de câble dans une première direction de façon à actionner le premier organe d'ajustement dans le premier sens et pour déplacer la seconde portion de câble dans une deuxième direction, opposée à la première direction, de façon à actionner le second organe d'ajustement dans le premier sens, lorsque ledit dispositif d'actionnement est amené de ladite première position à ladite deuxième position, afin d'augmenter la compression de la première suspension (24) et de la seconde suspension (26), et le dispositif d'actionnement étant configuré pour déplacer la première portion de câble dans la deuxième direction de façon à actionner le premier organe d'ajustement dans le second sens et pour déplacer la seconde portion de câble dans la première direction de façon à actionner le second organe d'ajustement dans le second sens, lorsque ledit dispositif d'actionnement est amené de ladite deuxième position à ladite première position, afin de réduire la compression de la première suspension et de la seconde suspension.

2. Kit selon la revendication **1, caractérisé en ce que** la première suspension comporte un premier ressort de rappel (27) qui tend à actionner le premier organe d'ajustement dans le second sens, **en ce que** la seconde suspension comporte un second ressort de rappel qui tend à actionner le second organe d'ajustement dans le premier sens, et **en ce que** le dispositif d'actionnement est configuré pour tirer la première portion de câble selon la première direction tout en relâchant simultanément la seconde portion de câble lorsque ledit dispositif d'actionnement est amené de ladite première position à ladite deuxième position, et **en ce que** le dispositif d'actionnement est configuré pour relâcher la première portion de câble tout en tirant simultanément la seconde portion de câble selon la première direction lorsque ledit dispositif d'actionnement est amené de ladite deuxième position à ladite première position.

3. Kit selon l'une quelconque des revendications **1 ou 2, caractérisé en ce que** le dispositif d'actionnement (32) comprend en outre un corps principal (38) ayant une première extrémité (38a) et une seconde extrémité (38b), ledit corps principal comportant un manchon de fixation (40) du dispositif d'actionnement au guidon (20) du véhicule (10), disposé au niveau de la première extrémité du corps principal et s'étendant suivant un axe (X).

4. Kit selon la revendication **3,** dans lequel le corps principal (38) comporte une portion de guidage (44) de la première portion de câble (34) et de la seconde portion de câble (36), disposée au niveau de la seconde extrémité (38b) du corps principal.

5. Kit selon la revendication **4,** dans lequel la portion de guidage (44) est configurée de sorte que la première portion de câble (34) et la seconde portion de câble (36) entrent dans le corps principal (38), selon une direction sensiblement parallèle à l'axe (X) du manchon de fixation (40).

6. Kit selon l'une quelconque des revendications **1 à 5, caractérisé en ce que** le dispositif d'actionnement (32) comporte des moyens de commande, configurés pour déplacer simultanément les première et seconde portions de câbles.

7. Kit selon la revendication **6,** dans lequel les moyens de commande sont rotatifs.

8. Kit selon l'une quelconque des revendications **3 à 5** en combinaison avec la revendication **6** ou **7,** dans lequel les moyens de commande comprennent en outre une bague (48), et dans lequel le corps principal (38) comporte une portion cylindrique (46), la bague étant montée pivotante sur ladite portion cylindrique, ladite bague présentant au moins une position de compression et une position de libération, ladite position de compression correspondant à ladite deuxième position du dispositif d'actionnement et ladite position de libération correspondant à ladite première position du dispositif d'actionnement.

9. Kit selon la revendication **8,** dans lequel la première portion de câble (34) comporte une première tête de câble (Ca) et la seconde portion de câble (36) comporte une seconde tête de câble (Cb), et dans lequel la bague (48) comprend une première portion d'accueil (50) pour la première tête de câble et une seconde portion d'accueil (52) pour la seconde tête de câble.

10. Kit selon la revendication **9,** dans lequel la première portion d'accueil (50) et la seconde portion d'accueil (52) sont espacées angulairement d'un angle inférieur à 180°, de préférence d'un angle sensiblement égal à 90°.

11. Kit selon l'une quelconque des revendications **8 à 10,** dans lequel le dispositif d'actionnement (32) comprend au moins un élément de maintien permettant de maintenir la bague (48) dans ladite position de compression ou dans ladite position de libération.

12. Kit selon l'une quelconque des revendications **8 à 11,** dans lequel lesdits moyens de commande comprennent en outre un élément d'actionnement comportant des moyens d'entrainement configurés pour entraîner la bague en rotation.

13. Kit selon la revendication **12,** dans lequel l'élément d'actionnement est une molette d'entrainement (64) s'étendant annulairement autour de la bague (48).

14. Vélo (10) muni d'un kit de suspensions à compression ajustable (12) selon l'une quelconque des revendications 1 à 13.

## Patentansprüche

1. Set von Aufhängungen mit einstellbarer Kompression (12) für ein Radfahrzeug (10), umfassend einen Lenker (20), wobei das Set von Aufhängungen aufweist:
• eine erste hydraulische Aufhängung mit einstellbarer Kompression (24), umfassend ein erstens Einstellungsorgan der Kompression (28), das dazu konfiguriert ist, die Kompression der ersten Aufhängung zu erhöhen, wenn sie in einer ersten Richtung betätigt wird, und die Kompression der ersten Aufhängung zu verringern, wenn sie in einer zweiten Richtung betätigt wird, die zur ersten Richtung entgegengesetzt ist,
• eine zweite hydraulische Aufhängung mit einstellbarer Kompression (26), umfassend ein zweites Einstellungsorgan der Kompression (30), das dazu konfiguriert ist, die Kompression der zweiten Aufhängung zu erhöhen, wenn sie in einer ersten Richtung betätigt wird, und die Kompression der zweiten Aufhängung zu verringern, wenn sie in einer zweiten Richtung betätigt wird, die zur ersten Richtung entgegengesetzt ist, wobei eine Betätigungsvorrichtung (32) der ersten Aufhängung und der zweiten Aufhängung mindestens eine erste Position und eine zweite Position aufweist, die von der ersten Position verschieden ist,
- einen ersten Kabelabschnitt (34), der ein erstes Ende, das mit der Betätigungsvorrichtung verbunden ist, und ein zweites Ende aufweist, das mit dem ersten Einstellungsorgan verbunden ist, und
- einen zweiten Kabelabschnitt (36), der ein erstes Ende, das mit der Betätigungsvorrichtung verbunden ist, und ein zweites Ende aufweist, das mit dem zweiten Einstellungsorgan verbunden ist,
**dadurch gekennzeichnet, dass** die Betätigungsvorrichtung (32) dazu konfiguriert ist, den ersten Kabelabschnitt in eine erste Richtung zu verschieben, um das erste Einstellungsorgan in der ersten Richtung zu betätigen und den zweiten Kabelabschnitt in einer zur ersten Richtung entgegengesetzten zweiten Richtung zu verschieben, um das zweite Einstellungsorgan in der ersten Richtung zu betätigen, wenn die Betätigungsvorrichtung von der ersten Position in die zweite Position gebracht wird, um die Kompression der ersten Aufhängung (24) und der zweiten Aufhängung (26) zu erhöhen, und wobei die Betätigungsvorrichtung dazu konfiguriert ist, den ersten Kabelabschnitt derart in die zweite Richtung zu verschieben, um das erste Einstellungsorgan in der zweiten Richtung zu betätigen und den zweiten Kabelabschnitt in die erste Richtung zu verschieben, um das zweite Einstellungsorgan in der zweiten Richtung zu betätigen, wenn die Betätigungsvorrichtung von der zweiten Position in die erste Position gebracht wird, um die Kompression der ersten Aufhängung und der zweiten Aufhängung zu verringern.

2. Set nach Anspruch 1, **dadurch gekennzeichnet, dass** die erste Aufhängung eine erste Rückstellfeder (27) aufweist, die dazu neigt, das erste Einstellungsorgan in die zweite Richtung zu betätigen, dadurch, dass die zweite Aufhängung eine zweite Rückstellfeder aufweist, die dazu neigt, das zweite Einstellungsorgan in die erste Richtung zu betätigen, und dadurch, dass die Betätigungsvorrichtung dazu konfiguriert ist, den ersten Kabelabschnitt in die erste Richtung zu ziehen und dabei gleichzeitig den zweiten Kabelabschnitt loszulassen, wenn die Betätigungsvorrichtung von der ersten Position in die zweite Position gebracht wird, und dadurch, dass die Betätigungsvorrichtung dazu konfiguriert ist, den ersten Kabelabschnitt loszulassen und dabei gleichzeitig den zweiten Kabelabschnitt in die erste Richtung zu ziehen, wenn die Betätigungsvorrichtung von der zweiten Position in die erste Position gebracht wird.

3. Set nach einem der Ansprüche 1 oder 2, **dadurch gekennzeichnet, dass** die Betätigungsvorrichtung (32) ferner einen Hauptkörper (38) aufweist, der ein erstes Ende (38a) und ein zweites Ende (38b) aufweist, wobei der Hauptkörper eine Befestigungsmanschette (40) der Betätigungsvorrichtung an dem Lenker (20) des Fahrzeugs (10) aufweist, die an dem ersten Ende des Hauptkörpers angeordnet ist und sich entlang einer Achse (X) erstreckt.

4. Set nach Anspruch 3, wobei der Hauptkörper (38) einen Führungsabschnitt (44) des ersten Kabelabschnitts (34) und des zweiten Kabelabschnitts (36) aufweist, der an dem zweiten Ende (38b) des Hauptkörpers angeordnet ist.

5. Set nach Anspruch 4, wobei der Führungsabschnitt (44) derart konfiguriert ist, dass der erste Kabelabschnitt (34) und der zweite Kabelabschnitt (36) in den Hauptkörper (38) in einer Richtung eintreten, die im Wesentlichen parallel zu der Achse (X) der Befestigungsmanschette (40) ist.

6. Set nach einem der Ansprüche 1 bis 5, **dadurch gekennzeichnet, dass** die Betätigungsvorrichtung (32) Steuermittel aufweist, die dazu konfiguriert sind, gleichzeitig den ersten und den zweiten Kabelabschnitt zu verschieben.

7. Set nach Anspruch 6, wobei die Steuermittel drehbar sind.

8. Set nach einem der Ansprüche 3 bis 5 in Kombination mit dem Anspruch 6 oder 7, wobei die Steuermittel ferner einen Ring (48) aufweisen und wobei der Hauptkörper (38) einen zylindrischen Abschnitt (46) aufweist, wobei der Ring schwenkbar auf dem zylindrischen Abschnitt befestigt ist, wobei der Ring mindestens eine Kompressionsposition und eine Freigabeposition aufweist, wobei die Kompressionsposition der zweiten Position der Betätigungsvorrichtung entspricht und die Freigabeposition der ersten Position der Betätigungsvorrichtung entspricht.

9. Set nach Anspruch 8, wobei der erste Kabelabschnitt (34) einen ersten Kabelkopf (Ca) und der zweite Kabelabschnitt (36) einen zweiten Kabelkopf (Cb) aufweist, und wobei der Ring (48) einen ersten Aufnahmeabschnitt (50) für den ersten Kabelkopf und einen zweiten Aufnahmeabschnitt (52) für den zweiten Kabelkopf aufweist.

10. Set nach Anspruch 9, wobei der erste Aufnahmeabschnitt (50) und der zweite Aufnahmeabschnitt (52) um einen Winkel von weniger als 180°, vorzugsweise um einen Winkel von im Wesentlichen gleich 90° winklig beabstandet sind.

11. Set nach einem der Ansprüche 8 bis 10, wobei die Betätigungsvorrichtung (32) mindestens ein Halteelement aufweist, das ermöglicht, den Ring (48) in der Kompressionsposition oder in der Freigabeposition zu halten.

12. Set nach einem der Ansprüche 8 bis 11, wobei die Steuermittel ferner ein Betätigungselement aufweisen, das Antriebsmittel aufweist, die dazu konfiguriert sind, den Ring in Drehung zu versetzen.

13. Set nach Anspruch 12, wobei das Betätigungselement ein Antriebsrändelrad (64) ist, das sich ringförmig um den Ring (48) erstreckt.

14. Fahrrad (10), das mit einem Set von Aufhängungen mit einstellbarer Kompression (12) nach einem der Ansprüche 1 bis 13 ausgestattet ist.

## Claims

1. An adjustable-compression suspension kit (12) for a wheeled vehicle (10) including a handlebar (20), said suspension kit comprising:
• a first hydraulic suspension with adjustable compression (24) including a first compression adjustment member (28) configured to increase the compression of the first suspension when it is actuated in a first manner and to reduce the compression of the first suspension when it is actuated in a second manner, opposite to the first manner;
• a second hydraulic suspension with adjustable compression (26) including a second compression adjustment member (30) configured to increase the compression of the second suspension when it is actuated in a first manner and to reduce compression of the second suspension when it is actuated in a second manner, opposite to the first manner;
• an actuator device (32) for actuating the first and second suspensions, and presenting at least a first position and a second position that is distinct from the first position;
• a first cable portion (34) having a first end connected to the actuator device and a second end connected to the first adjustment member; and
• a second cable portion (36) having a first end connected to the actuator device and a second end connected to the second adjustment member;
the kit being **characterized in that**, when the actuator device (32) is moved from said first position to said second position, said actuator device is configured to move the first cable portion in a first direction in order to actuate the first adjustment member in the first manner and to move the second cable portion in a second direction, opposite to the first direction, in order to actuate the second adjustment member in the first manner, in order to increase the compression of the first and second suspensions (24, 26), and when the actuator device is moved from said second position to said first position, said actuator device being configured to move the first cable portion in the second direction in order to actuate the first adjustment member in the second manner and to move the second cable portion in the first direction in order to actuate the second adjustment member in the second manner, in order to reduce the compression of the first suspension and second suspensions.

2. A kit according to claim 1, **characterized in that** the first suspension includes a first return spring (27) that tends to actuate the first adjustment member in the second manner, **in that** the second suspension includes a second return spring that tends to actuate the second adjustment member in the first manner, and **in that** the actuator device is configured to pull the first cable portion in the first direction while simultaneously releasing the second cable portion when said actuator device is moved from said first position to said second position, and **in that** the actuator device is configured to release the first cable portion while simultaneously pulling the second cable portion in the first direction when said actuator device is moved from said second position to said first position.

3. A kit according to claim 1 or claim 2, **characterized in that** the actuator device (32) further includes a main body (38) having a first end (38a) and a second end (38b), said main body including a fastener sleeve (40) for fastening the actuator device to the handlebar (20) of the vehicle (10), which sleeve is arranged at the first end of the main body and extends along an axis (X).

4. A kit according to claim 3, wherein the main body (38) includes a guide portion (44) for guiding the first and second cable portions (34; 36) and arranged at the second end (38b) of the main body.

5. A kit according to claim 4, wherein the guide portion (44) is configured so that the first cable portion (34) and the second cable portion (36) enter the main body (38) in a direction that is substantially parallel to the axis (X) of the fastener sleeve (40).

6. A kit according to any one of claims 1 to 5, **characterized in that** the actuator device (32) includes control means, configured to move the first and second cable portions simultaneously.

7. A kit according to claim 6, wherein the control means are rotary.

8. A kit according to any one of claims 3 to 5 in combination with claims 6 or 7, wherein the control means further comprise a ring (48), and wherein the main body (38) includes a cylindrical portion (46), the ring being mounted to pivot on said cylindrical portion, said ring presenting at least a compression position and a release position, said compression position corresponding to said second position of the actuator device and said release position corresponding to said first position of the actuator device.

9. A kit according to claim 8, wherein the first cable portion (34) includes a first cable nipple (Ca) and the second cable portion (36) includes a second cable nipple (Cb), and wherein the ring (48) includes a first receiver portion (50) for receiving the first cable nipple and a second receiver portion (52) for receiving the second cable nipple.

10. A kit according to claim 9, wherein the first and second receiver portions (50, 52) are angularly spaced apart by an angle of less than 180°, preferably by an angle that is substantially equal to 90°.

11. A kit according to any one of claims 8 to 10, wherein the actuator device (32) includes at least one holder element serving to hold the ring (48) in said compression position or in said release position.

12. A kit according to any one of claims 8 to 11, wherein said control means further include an actuator element comprising drive means that are configured to turn the ring.

13. A kit according to claim 12, wherein the actuation element is a drive wheel (64) extending annularly about the ring (48).

14. A bicycle (10) provided with an adjustable-compression suspension kit (12) according to any one of claims 1 to 13.
